# EUROPEAN PATENT SPECIFICATION

(11) **EP 3 220 134 B1**
(45) Date of publication and mention of the grant of the patent: **18.12.2019**
(21) Application number: 15859133.9
(22) Date of filing: 05.10.2015
(51) Int. Cl.: G01N 23/04, G01N 23/087, G01N 23/18, G01T 1/20

(54) **X-RAY INSPECTION DEVICE**
RÖNTGENSTRAHLINSPEKTIONSVORRICHTUNG
DISPOSITIF D'INSPECTION À RAYONS X

(30) Priority: 14.11.2014 JP 2014232130
(43) Date of publication of application: 20.09.2017
(73) Proprietor: Ishida Co., Ltd., Kyoto 606-8392 (JP)
(72) Inventor: SUHARA, Kazuhiro, Ritto-shi Shiga 520-3026 (JP)
(74) Representative: Global IP Europe Patentanwaltskanzlei
(86) International application number: PCT/JP2015/078132
(87) International publication number: WO 2016/076036

(56) References cited:
- JP-A- 2005 203 708
- JP-A- 2006 329 822
- JP-A- 2006 329 822
- JP-A- 2009 085 845
- JP-A- 2009 085 845
- JP-A- 2011 080 887
- JP-A- 2011 089 965
- JP-A- 2011 145 253
- JP-A- 2012 154 732
- US-A1- 2004 155 198
- US-A1- 2013 341 517
- US-B1- 6 370 223
- US-B2- 8 229 065

## Description

### TECHNICAL FIELD

The present invention relates to an X-ray inspecting apparatus.

### BACKGROUND ART

In a production line for foodstuffs or other products, inspections are in some cases made by an X-ray inspecting apparatus so that products contaminated with foreign materials are not shipped out. In this X-ray inspecting apparatus, goods being conveyed are irradiated with X-rays, and the state of X-ray transmissivity is detected by a detection part to inspect whether or not the goods have been contaminated with foreign materials.

The apparatus disclosed in, e.g., Patent Literature 1 (Japanese Laid-open Patent Publication No. 2009-85627) is submitted as an example of such an X-ray inspecting apparatus. In this apparatus, scintillators are disposed over photodiodes (elements), X-rays incident from above are converted to light by the scintillators, and the light is caused to be incident on the photodiodes. The photodiodes convert the light intensity to electrical signals and output these signals as detection signals.

Patent Literature 2 (Japanese Laid-open Patent Publication No. 2005-203708) discloses the technique of including CCDs (elements) and scintillators, and disposing the scintillators on the sides opposite the X-ray-incident sides of the CCDs to perform X-ray imaging.

JP 2006 329822 A discloses an X-ray inspecting apparatus comprising; an X-ray source configured to radiate X-rays onto goods to be inspected; a detection part configured to detect X-rays of a predetermined energy band and visible light rays of a predetermined wavelength band and to generate a signal; an image production part configured to produce an image on the basis of the signal generated by the detection part; and an inspection part configured to inspect the goods on the basis of the image produced by the image production part.

### SUMMARY OF THE INVENTION

### <Technical Problem>

X-ray inspection apparatuses that employ an X-ray detection part having numerous elements disposed in a straight line, such as the X-ray inspecting apparatus disclosed in Patent Literature 1 (Japanese Laid-open Patent Publication No. 2009-85627), have been widely used in recent years. The technique disclosed in Patent Literature 2 (Japanese Laid-open Patent Publication No. 2005-203708) has the merit of making it possible to take images with X-rays of an energy band throughout a wide range.

However, when there is an increase in the number of elements provided to the X-ray detection part and the elements are disposed on the X-ray-incident side of the scintillators, the costs of manufacturing including assembly tend to rise.

An object of the present invention is to provide an X-ray inspecting apparatus with which X-rays of a broad energy band can be detected while manufacturing costs are suppressed.

### <Solution to Problem>

An X-ray inspecting apparatus according to a first aspect of the present invention includes an X-ray source, a detection part, an image production part, and an inspection part. The X-ray source radiates X-rays onto goods to be inspected. The detection part detects X-rays of a predetermined energy band and visible light rays of a predetermined wavelength band, and generates a signal. The image production part produces an image on the basis of the signal generated by the detection part. The inspection part inspects the goods on the basis of the image produced by the image production part. Additionally, the detection part has a plurality of detection units. Each of the plurality of detection units has a scintillator extending in a predetermined direction, a detection main body, and a base. The scintillators emit visible light rays of the predetermined wavelength band by absorbing X-rays of an energy band higher than the predetermined energy band. The detection main bodies include a plurality of elements. The plurality of elements are disposed on the sides of the scintillators that face the X-ray source, and are aligned in the predetermined direction in which the scintillators extend. The plurality of elements are sensitive to X-rays of the predetermined energy band and visible light rays of the predetermined wavelength band, and the elements generate the signal. The bases support the scintillators and the detection main bodies. The plurality of detection units are aligned along the predetermined direction within the detection part so that the scintillators and the detection main bodies of any of the detection units are aligned without gaps with the scintillators and the detection main bodies of adjacent detection units.

In this aspect, because the plurality of elements are disposed on the side of the scintillator that faces the X-ray source, X-rays are directly incident on the elements, and X-rays of a predetermined energy band are detected by the elements. X-rays of an energy band higher than the predetermined energy band are also detected by the elements because these X-rays are converted to visible light rays of a predetermined wavelength band by the scintillator. Thus, the detection units are able to detect X-rays of a broad energy band.

If a configuration were used in which all of the elements are aligned on one unit, the unit would be larger in size and manufacturing costs would rise for reasons such as assembly being more difficult, but in this aspect, the configuration employed has a plurality of detection units aligned in a predetermined direction. Manufacturing costs are thereby suppressed.

Furthermore, when the configuration employed has an alignment of detection units in which a plurality of elements are disposed on the sides of the scintillators that face the X-ray source, there is a risk that the elements and the scintillators would not be continuous in the borders of adjacent detection units. However, in the X-ray inspecting apparatus according to the first aspect of the present invention, the plurality of detection units are aligned in a predetermined direction so that the scintillators and the detection main bodies of the detection units are aligned without gaps with the scintillators and the detection main bodies of the adjacent detection units. Therefore, the continuity of the elements and the scintillators is ensured, and the problem of X-ray sensitivity being lowered in any section along the predetermined direction is suppressed.

An X-ray inspecting apparatus according to a second aspect of the present invention is the X-ray inspecting apparatus according to the first aspect, wherein the bases of the detection units are made of a ceramic material.

In this aspect, because ceramic bases of high hardness are employed, if two bases of adjacent detection units are brought into contact and the relative positions thereof are fixed, there are not likely to be situations in which the bases then deform to compromise the continuity of the elements and the scintillators.

An X-ray inspecting apparatus according to a third aspect of the present invention is the X-ray inspecting apparatus according to the first or second aspect, wherein the scintillators, the detection main bodies, and the bases are of equal length in the predetermined direction among the plurality of detection units.

In this aspect, when the bases of adjacent detection units are brought in contact and the relative positions thereof are determined, the scintillators and the detection main bodies naturally come to be aligned without gaps in the borders of the detection units. Therefore, the assembly steps, including the step of aligning the plurality of detection units, are simplified, and consequently, manufacturing costs fall.

An X-ray inspecting apparatus according to a fourth aspect of the present invention is the X-ray inspecting apparatus according to any of the first through third aspects, wherein each of the detection main bodies has a fixed part fixed to the base, and an overhanging part protruding from an end of the base. The plurality of elements are included in the overhanging part.

In this aspect, because the elements are disposed on the overhanging parts of the detection main bodies protruding from the bases, even in a structure of the present invention that has the X-ray source, the elements, and the scintillators aligned, it is possible to achieve a state in which there are no bases between the X-ray source and the elements.

Specifically, if the elements were to be included on the fixed parts fixed to the bases, the alignment would be the bases, the elements, and the scintillators, and X-rays would first pass through the bases should X-rays be caused to be incident not from the scintillator-side but from the element-side. The bases generally have high X-ray absorptivity, and the output of the X-ray source would need to be increased in order to maintain detection sensitivity.

In contrast, due to the elements being disposed on the overhanging parts in this aspect, it is possible to achieve a detection part that can detect X-rays over a broad energy band with low output, in which X-rays are directly incident on the elements from the X-ray source and X-rays that have passed through the elements are incident on the scintillators.

An X-ray inspecting apparatus according to a fifth aspect of the present invention is the X-ray inspecting apparatus according to the fourth aspect, wherein the X-ray source is positioned above the plurality of elements. The detection part further has a cover member that covers the plurality of elements from above. The cover member has a lower rate of absorption of the X-rays than the bases.

In this aspect, because the elements are disposed on the overhanging parts, X-rays enter the elements from the above X-ray source, but there is a risk that dust will collect on and adhere to the tops of the elements. In view of this, the elements are covered from above by the cover panel, and loss of sensitivity of the elements is suppressed. Because the cover panel employed has a lower rate of X-ray absorption than the bases, detection sensitivity can be maintained without increasing the output of the X-ray source.

An X-ray inspecting apparatus according to a sixth aspect of the present invention is the X-ray inspecting apparatus according to the fifth aspect, wherein the detection part further has a support member configured to support a plurality of the detection units. The support member has a first side face contact part which comes into contact with first side faces of the bases of the plurality of detection units. The cover member has a second side face contact part. The second side face contact part comes into contact with second side faces that oppose the first side faces of the bases of the plurality of detection units. The bases of the plurality of detection units are positioned by the first side face contact part of the support member and by the second side face contact part of the cover member.

In this aspect, the support member supporting the plurality of detection units and the cover member covering the plurality of elements from above both have a contact part that comes into contact with side faces of the bases of the plurality of detection units. The bases of the plurality of detection units are then positioned by the first side face contact part of the support member and the second side face contact part of the cover member, whereby the scintillators and the detection main bodies supported on the bases are also positioned. The scintillators and detection main bodies of two adjacent detection units are thereby aligned without gaps, and the continuity of the elements and the scintillators is ensured.

An X-ray inspecting apparatus according to a seventh aspect of the present invention is the X-ray inspecting apparatus according to any of the first through third aspects, wherein the detection part further has a support member configured to support the plurality of detection units, and a slitted member. The slitted member, having a slit formed therein through which the X-rays pass, is disposed between the X-ray source and the plurality of detection units. The plurality of detection units are sandwiched between the support member and the slitted member.

In this aspect, the state of X-ray detection in the detection part stabilizes because X-rays that have passed through the slit in the slitted member enter the elements and the scintillators. The plurality of detection units are held by being sandwiched between the slitted member and the support member supporting the plurality of detection units. With the scintillators and the detection main bodies of the plurality of detection units aligned without gaps, the plurality of detection units can be maintained as being reliably supported on the support member.

### <Advantageous Effects of Invention>

With the X-ray inspecting apparatus according to the present invention, X-rays of a broad energy band can be detected because the plurality of elements are disposed on the sides of the scintillators that face the X-ray source. Additionally, manufacturing costs are suppressed because of a configuration is employed in which the plurality of detection units are aligned in the predetermined direction. Furthermore, because the plurality of detection units are aligned in the predetermined direction so that the scintillators and detection main bodies of two adjacent detection units are aligned without gaps, the continuity of the elements and scintillators is ensured, and X-rays of a broad energy band can be detected in all areas along the predetermined direction.

### BRIEF DESCRIPTION OF THE DRAWINGS

FIG. 1 is an external perspective view of an X-ray inspecting apparatus according to an embodiment of the present invention;
FIG. 2 is a simple configuration diagram of the inside of a shield box of the X-ray inspecting apparatus;
FIG. 3 is a control block diagram of the X-ray inspecting apparatus;
FIG. 4 is a schematic diagram showing the principle of inspection using X-rays;
FIG. 5 is a cross-sectional view of a line sensor assembly sectioned along a plane orthogonal to the longitudinal direction;
FIG. 6 is an enlarged view of part of FIG. 5;
FIG. 7A is a plan view showing the assembly procedure for the line sensor assembly;
FIG. 7B is a cross-sectional view along line VIIB-VIIB of FIG. 7A;
FIG. 8A is a plan view showing the assembly procedure for the line sensor assembly;
FIG. 8B is a cross-sectional view along line VIIIB-VIIIB of FIG. 8A;
FIG. 9 is a plan view showing the assembly procedure for the line sensor assembly;
FIG. 10A is a plan view showing the assembly procedure for the line sensor assembly; and
FIG. 10B is a cross-sectional view along line XB-XB of FIG. 10A.

### DESCRIPTION OF EMBODIMENTS

### (1) Overall configuration

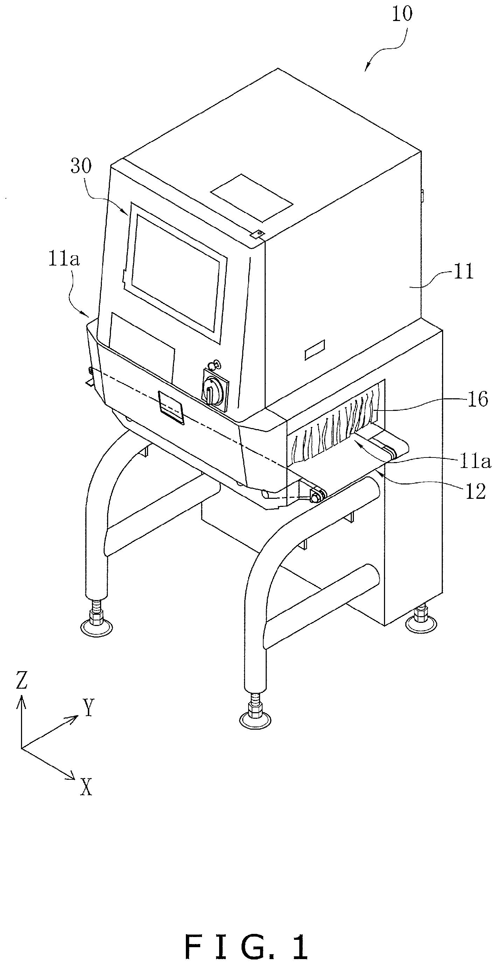

An external view of an X-ray inspecting apparatus according to an embodiment of the present invention is shown in FIG. 1. This X-ray inspecting apparatus 10, which inspects whether or not there are foreign materials in goods on a production line for foodstuffs and other goods, radiates X-rays onto continuously conveyed goods and determines whether or not foreign materials are included in the goods on the basis of the quantity of X-rays transmitted through the goods. It is supposed that foreign materials as small as approximately 0.5 mm would be detected in the X-ray inspecting apparatus 10.

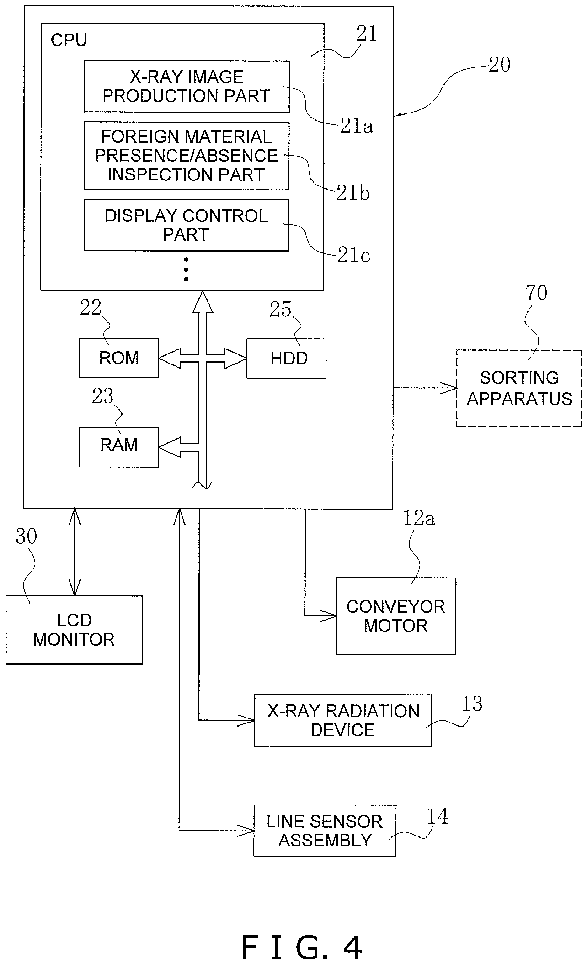

The X-ray inspecting apparatus 10 determines whether or not goods G, which are the articles to be inspected in the X-ray inspecting apparatus 10, contain foreign materials, and when the goods are determined by the X-ray inspecting apparatus 10 to contain foreign materials, the goods are sorted as inferior products by a sorting apparatus 70 (see FIG. 4) disposed on the downstream side of the X-ray inspecting apparatus 10.

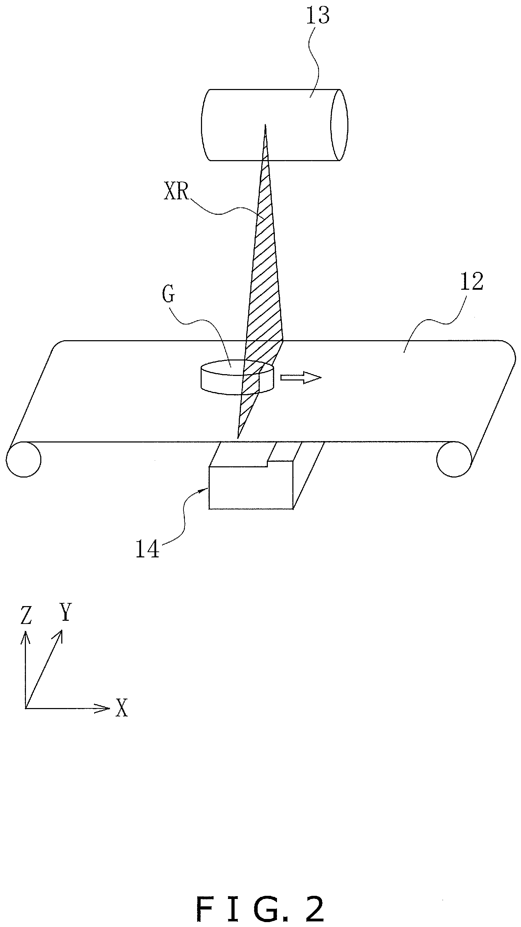

The X-ray inspecting apparatus 10 is configured from a shield box 11, a conveyor 12, an X-ray radiation device 13, a line sensor assembly 14, an LCD monitor 30 with a touch panel function, a control computer 20, etc., as shown in FIGS. 1 and 2. The X direction, Y direction, and Z direction shown in the drawings represent, respectively: the left-right direction, which is the direction in which the goods G are conveyed; the forward-backward direction, which is the longitudinal direction of the line sensor assembly 14; and the up-down direction, which is the height direction.

### (2) Detailed configuration

### (2-1) Shield box

The shield box 11 has openings 11a in both sides. The openings 11a are open portions for conveying the goods G in and out. Part of the conveyor 12, the X-ray radiation device 13, the line sensor assembly 14, the control computer 20, etc. are housed within the shield box 11.

The openings 11a, which serve as openings to convey the goods G in and out, are closed by shielding curtains 16 for suppressing leakage of X-rays to the exterior of the shield box 11. The shielding curtains 16 are molded from rubber containing lead, and are pushed apart by the goods G when the goods G are conveyed in or out.

In addition to the LCD monitor 30, a key insertion hole and/or a power source switch is also disposed in the upper part of the front face of the shield box 11.

### (2-2) Conveyor

The conveyor 12 conveys goods G inside the shield box 11, and the conveyor is driven by a conveyor motor 12a shown in FIG. 4. The conveying speed of the conveyor 12 is precisely controlled through inverter control of the conveyor motor 12a by the control computer 20.

### (2-3) X-ray radiation device

The X-ray radiation device 13, which is an X-ray source disposed above the central portion of the conveyor 12, radiates X-rays (refer to the symbol XR in FIG. 2 etc.) toward the line sensor assembly 14 underneath, as shown in FIG. 2. Specifically, the X-ray radiation device 13 radiates X-rays onto the goods G to be inspected, which are placed on and conveyed by the conveyor 12 underneath.

### (2-4) LCD monitor

The LCD monitor 30, which is a liquid crystal display that uses a full-dot display, displays X-ray images and/or foreign material determination results. The LCD monitor 30 also has a touch panel function, and also displays a screen prompting, *inter alia,* input of parameters pertaining to initial settings and/or foreign material inspection.

### (2-5) Control computer

The control computer 20 is equipped with a CPU 21, and is also equipped with a ROM 22, a RAM 23, and a hard disk drive (HDD) 25 as main storage parts controlled by the CPU 21, as shown in FIG. 4. The CPU 21, the ROM 22, the RAM 23, the HDD 25, and other components are connected to each other via an address bus, a data bus, and other bus lines. By executing control programs, the CPU 21 fulfills the role of functional parts; namely, an X-ray image production part 21a, a foreign material presence/absence inspection part 21b, and a display control part 21c.

The control computer 20 is also connected with the conveyor motor 12a, the X-ray radiation device 13, the line sensor assembly 14, the LCD monitor 30, the sorting apparatus 70, etc.

### (2-6) Line sensor assembly

The line sensor assembly 14, which is disposed underneath the conveyor 12 as shown in FIG. 2, is an assembly that detects X-rays radiated downward from the X-ray radiation device 13 and transmitted through the goods G and conveyor 12, creates a detection signal, and provides the detection signal to the control computer 20.

The line sensor assembly 14 is configured mainly from first through fourth detection units 41 to 44, a mount 45 made of metal, a cover panel 46 made of carbon, and a slitted panel 47 made of metal.

### (2-6-1) Detection units

The first through fourth detection units 41 to 44 are a plurality of units with the same configuration, each of which has a ceramic substrate 51, a detection main body 52, and a scintillator 53.

The ceramic substrate 51 is a substrate made of a ceramic which supports the detection main body 52 and supports the scintillator 53 via the detection main body 52, and the ceramic substrate has higher hardness and resists deformation better than would a plastic substrate.

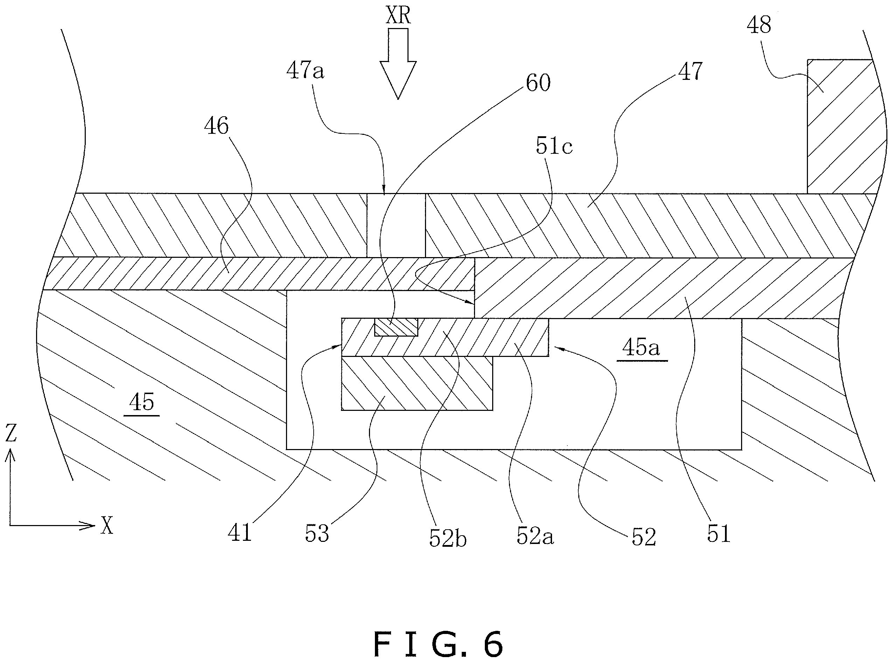

The detection main body 52 is a CMOS image sensor, including a plurality of elements 60 which are light-receiving elements. The plurality of elements 60 are disposed in a straight line in the forward-backward direction (the Y direction). The elements 60 are disposed on the scintillator 53, i.e., on the side of the scintillator 53 that faces the X-ray radiation device 13, as shown in FIG. 6. The elements 60 are sensitive to X-rays in a predetermined energy band and visible light rays in a predetermined wavelength band, and the elements generate detection signals.

The detection main body 52 has a fixed part 52a fixed to an end part of the ceramic substrate 51, and an overhanging part 52b protruding leftward from a left-side end face 51c of the ceramic substrate 51, as shown in FIG. 6. The plurality of elements 60 receive light in the overhanging part 52b. The elements 60 are connected to respective circuits placed on the ceramic substrate 51.

The plurality of elements 60 are positioned vertically below the X-ray radiation device 13, and X-rays spreading out in a fan shape along a vertical plane from the X-ray radiation device 13, as shown in FIG. 2, enter the elements 60 from directly above, as shown in FIG. 6.

The scintillator 53 is a thin panel-shaped phosphor extending in the forward-backward direction (the Y direction) in which the plurality of elements 60 are aligned, and is bonded to the lower face of the detection main body 52. The scintillator 53 emits visible light rays of a predetermined wavelength band by absorbing X-rays of an energy band higher than the predetermined energy band. The visible light rays emitted from the scintillator 53 are detected by the elements 60 positioned directly above. The elements 60 detect these visible light rays and X-rays of the predetermined energy band, convert the intensities thereof to electric signals, and output these signals as detection signals to the control computer 20.

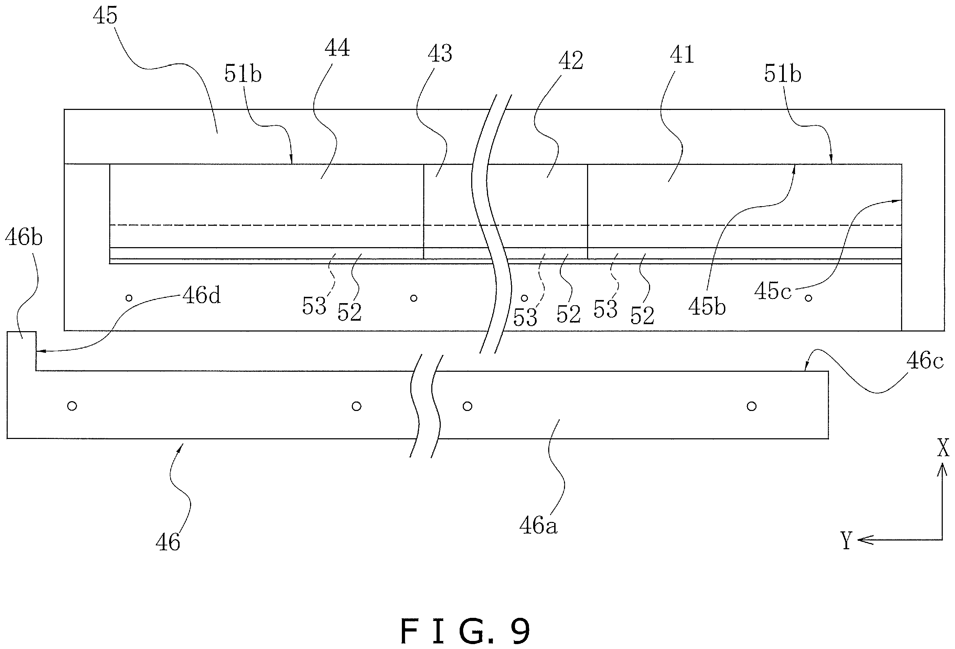

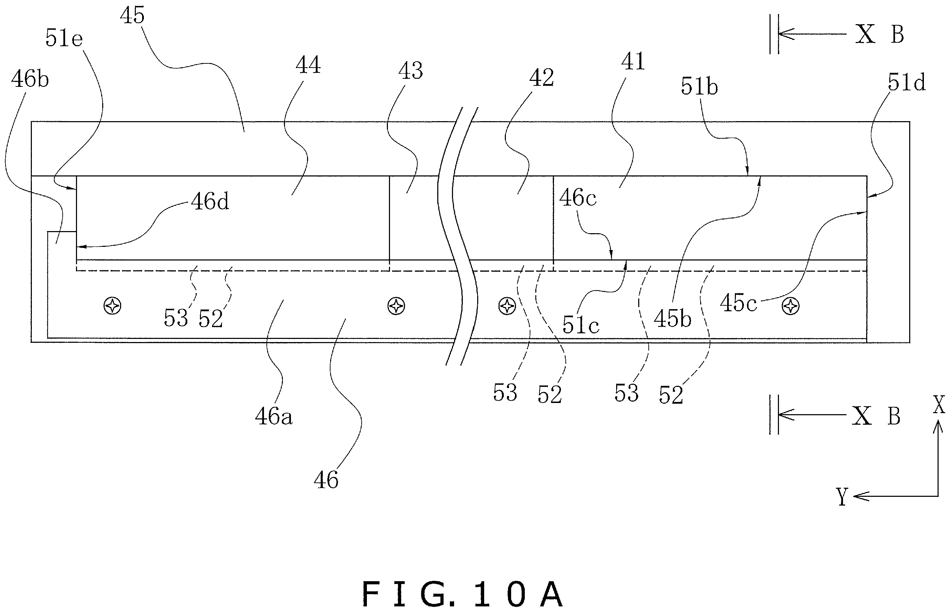

The first through fourth detection units 41 to 44 are aligned in the forward-backward direction (the Y direction) in the line sensor assembly 14 so that the detection main body 52 and the scintillator 53 of one of the first through fourth detection units 41 to 44 are aligned without gaps with the detection main body 52 and scintillator 53 of one of the adjacent first through fourth detection units 41 to 44 (for example, the second detection unit 42 adjacent to the first detection unit 41), as shown in FIGS. 9 and 10A. Specifically, in each of the first through fourth detection units 41 to 44, the forward-backward directional length of the ceramic substrate 51, the forward-backward directional length of the detection main body 52, and the forward-backward directional length of the scintillator 53 are equal. The detection main body 52 and the scintillator 53 are aligned without gaps in the border between two adjacent detection units, by aligning the first through fourth detection units 41 to 44 as shown in FIG. 9, so that the front and back end faces of a ceramic substrate 51 are in contact with the front and back end faces of the ceramic substrates 51 of the adjacent first through fourth detection units 41 to 44.

### (2-6-2) Mount

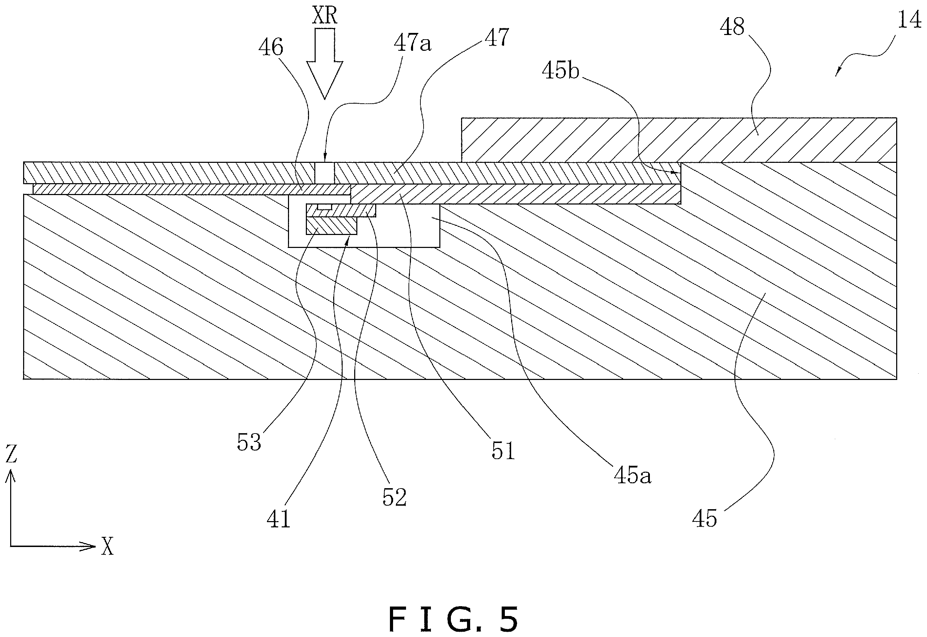

The metal mount 45 is a support member which supports the first through fourth detection units 41 to 44. The first through fourth detection units 41 to 44, and the hereinafter-described cover panel 46 and slitted panel 47, are placed on the metal mount 45, and are sandwiched by the mount 45 and a fixing panel 48, as shown in FIGS. 5, 6, etc.

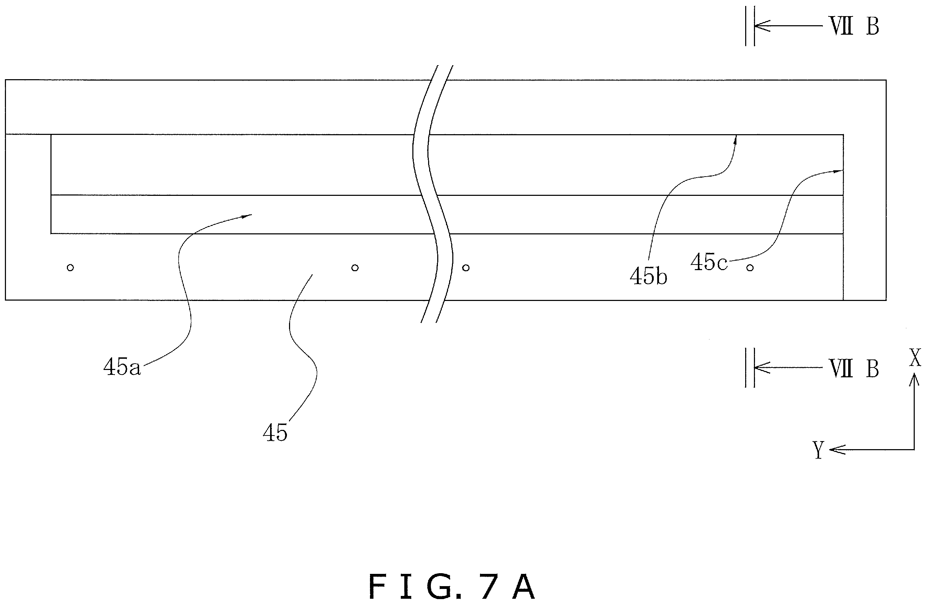

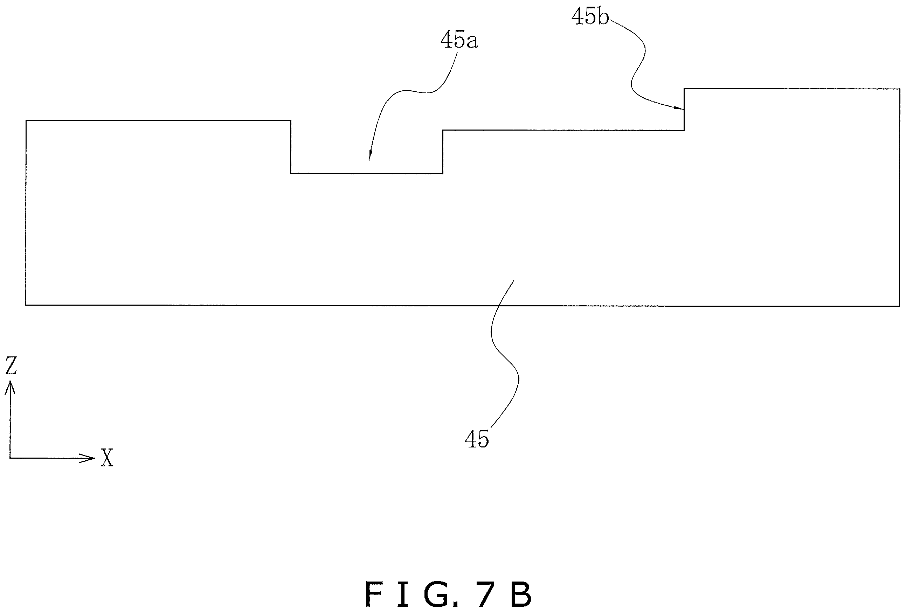

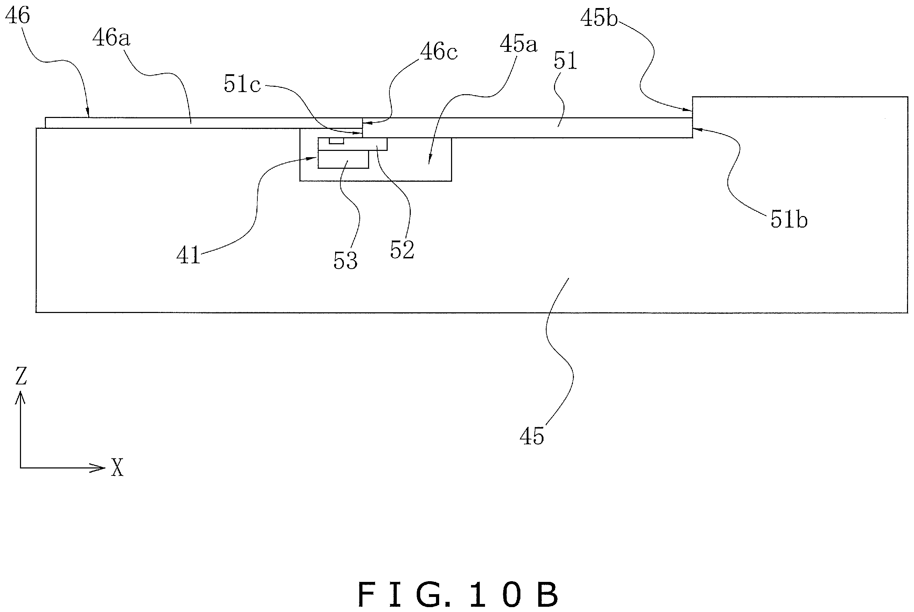

On the upper part of the mount 45 are formed a groove 45a extending in the forward-backward direction (the Y direction), and step side faces 45b, 45c, as shown in FIGS. 7A, 7B, etc. The groove 45a forms an accommodating space for the detection main bodies 52 and the scintillators 53 of the first through fourth detection units 41 to 44, as shown in FIG. 6. The step side face 45b extends in the forward-backward direction (the Y direction) and faces to the left. The step side face 45b is in contact with right-side end faces 51b of the ceramic substrates 51 of the first through fourth detection units 41 to 44, as shown in FIGS. 10A and 10B. The step side face 45c extends to leftward along the left-right direction (the X direction) from the front-side end of the step side face 45b, and faces rearward. The step side face 45c is in contact with a front-side end face 51d of the first detection unit 41, as shown in FIG. 10A.

### (2-6-3) Cover panel

The cover panel 46 is a panel-shaped member covering the plurality of elements 60 of the four first through fourth detection units 41 to 44 from above. The cover panel 46, which is made of carbon, has lower X-ray absorptivity than the ceramic substrate 51.

The cover panel 46 is placed on the mount 45, and the height position of the upper face of the cover panel is level with the position of the upper faces of the ceramic substrates 51 of the first through fourth detection units 41 to 44 (see FIGS. 5 and 6). The cover panel 46 is configured from a main body part 46a extending lengthwise in the forward-backward direction (the Y direction), and a protruding part 46b protruding rightward from a rear end part of the main body part 46a, as shown in FIG. 9 etc. A right-side end face 46c of the main body part 46a of the cover panel 46 is in contact with the left-side end faces 51c of the ceramic substrates 51 of the four first through fourth detection units 41 to 44.

The right-side end face 46c of the main body part 46a of the cover panel 46 is in contact with the left-side end faces 51c of the ceramic substrates 51, and the step side face 45b of the mount 45 described above is in contact with the right-side end faces 51b of the ceramic substrates 51, whereby the first through fourth detection units 41 to 44 are positioned with respect to the left-right direction (the X direction).

Furthermore, a front side face 46d of the protruding part 46b of the cover panel 46 is in contact with a rear-side end face 51e of the fourth detection unit 44, and the step side face 45c of the mount 45 described above is in contact with the front-side end face 51d of the first detection unit 41 as shown in FIG. 10A, whereby the first through fourth detection units 41 to 44 are positioned with respect to the forward-backward direction (the Y direction).

### (2-6-4) Slitted panel

The slitted panel 47 is a metal plate disposed so as to cover, from above, the cover panel 46 and the ceramic substrates 51 of the left-to-right aligned first through fourth detection units 41 to 44 described above. One slitted panel 47 is placed on top of four ceramic substrates 51 and one cover panel 46, and the slitted panel presses these components down on the upper face of the mount 45. Specifically, the first through fourth detection units 41 to 44 are sandwiched between one mount 45 and one slitted panel 47.

One long slit 47a extending in the forward-backward direction is formed in the slitted panel 47, directly above the plurality of elements 60 extending continuously in the forward-backward direction (the Y direction) across the first through fourth detection units 41 to 44 (see FIGS. 5 and 6). X rays radiated from the X-ray radiation device 13 pass through the slit 47a and through the carbon cover panel 46 to be incident on the elements 60 of the detection main bodies 52.

### (3) Inspection of foreign material presence/absence by control computer

### (3-1) X-ray image production

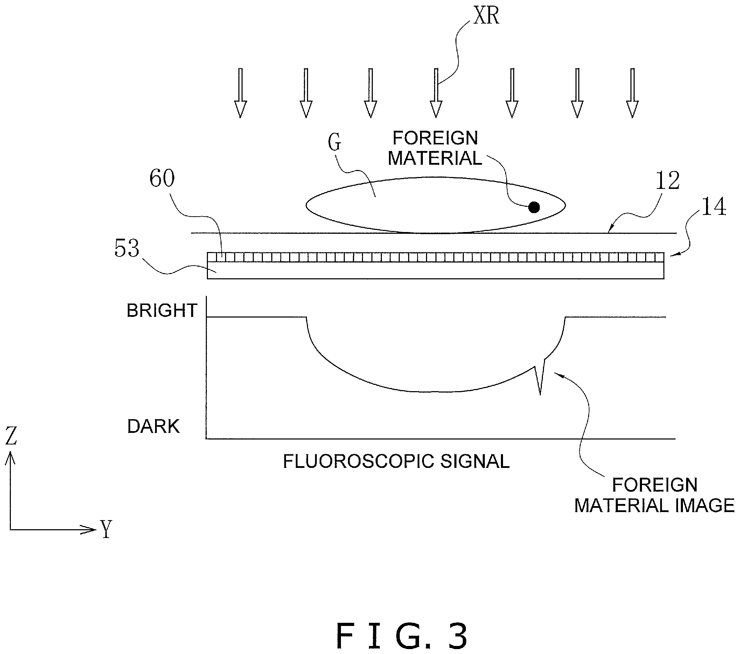

When goods G pass through the X-ray radiation area (refer to the hatched portion in FIG. 2), the X-ray image production part 21a of the control computer 20 acquires fluoroscopic signals (see FIG. 3), which are detection signals from the elements 60 of the line sensor assembly 14 in a brief time interval, and uses these fluoroscopic signals as a basis to produce an X-ray image of the goods G. Specifically, the X-ray image production part 21a takes the difference between the output of the elements 60 when there are no foreign materials and the output of the elements 60 when there are foreign materials, and from this difference produces an X-ray image of the goods G.

### (3-2) Determination of foreign material presence/absence

From the obtained X-ray image, the foreign material presence/absence inspection part 21b of the control computer 20 determines whether or not the goods G have been contaminated by foreign materials. There are several determination methods, but one example is to set a reference level (a threshold value) in accordance with the general thickness of the detected objects, and to determine that foreign materials have contaminated the goods G when the image is darker than the reference level. As a result of the determinations by the determination methods, if there is determined to be foreign material contamination in the determination of any method, the foreign material presence/absence inspection part 21b determines that foreign materials have contaminated the goods G. In this case, the control computer 20 puts an inferior product display on the LCD monitor 30 and sends a sorting command to the sorting apparatus 70.

### (4) Assembly procedure for line sensor assembly

Next, some of the assembly steps for the line sensor assembly are described with reference to FIGS. 7A, 7B to 10A, and 10B.

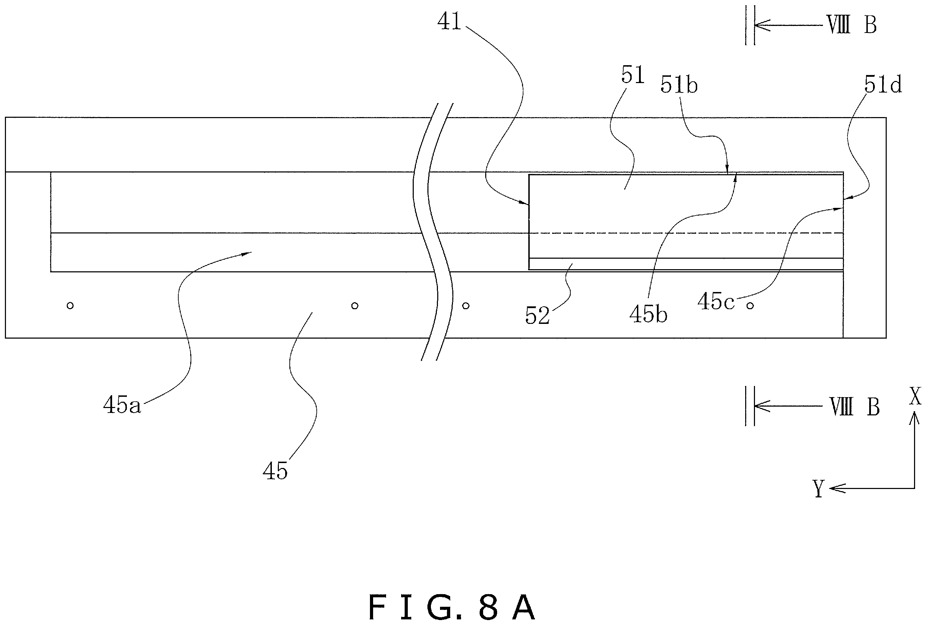

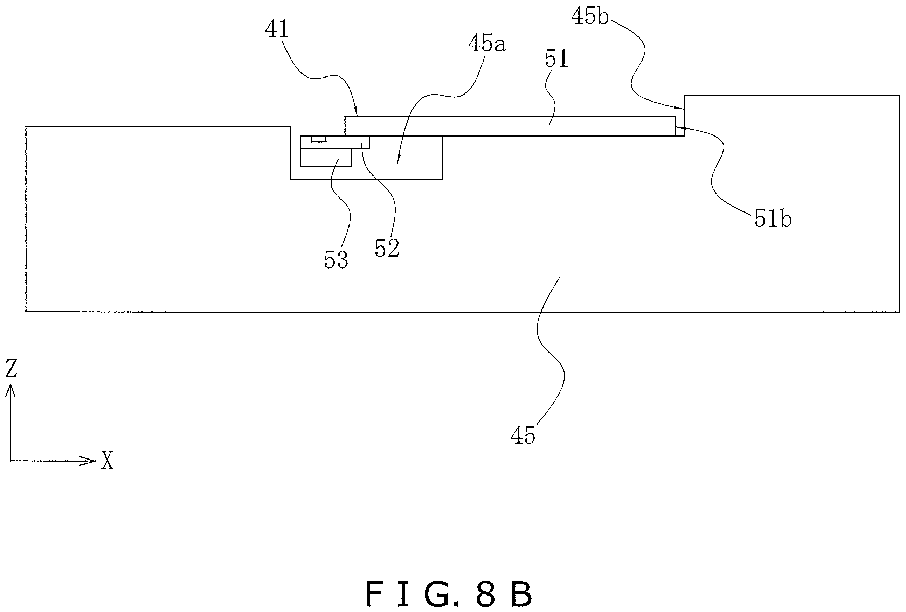

The first detection unit 41 is first placed on the upper face of the mount 45 shown in FIGS. 7A and 7B. The first detection unit 41 is placed on the upper face of the mount 45 so that the right-side end face 51b of the ceramic substrate 51 is near the step side face 45b of the mount 45, and the front-side end face 51d of the ceramic substrate 51 is near the step side face 45c of the mount 45, as shown in FIGS. 8A and 8B.

Next, the other detection units are placed in order on the mount 45 so that the second detection unit 42 is aligned with the rear side of the first detection unit 41, the third detection unit 43 is aligned with the rear side of the second detection unit 42, and the fourth detection unit 44 is aligned with the rear side of the third detection unit 43.

When the first through fourth detection units 41 to 44 are then placed on the mount 45 so that the right-side end faces 51b of the ceramic substrates 51 of the first through fourth detection units 41 to 44 come to be in close proximity to the step side face 45b of the mount 45 as shown in FIG. 9, the cover panel 46 is next placed on the mount 45.

After the cover panel 46 has been placed on the mount 45, the cover panel 46 is pushed on the front and right sides. The ceramic substrates 51 of the first through fourth detection units 41 to 44 are thereby pushed on the front and right sides by the cover panel 46. The right-side end faces 51b of the ceramic substrates 51 of the first through fourth detection units 41 to 44 then come to be in contact with the step side face 45b of the mount 45, and the front-side end face 51d of the first detection unit 41 comes to be in contact with the step side face 45c of the mount 45. This is the regular planar positioning of the first through fourth detection units 41 to 44, and in this state, the cover panel 46 is screwed to the mount 45. The screwing may be accomplished by placing the slitted panel 47 on top and then securing both the slitted panel 47 and the cover panel 46 to the mount 45.

### (5) Characteristics of X-ray inspecting apparatus

### (5-1)

In the X-ray inspecting apparatus 10, because the plurality of elements 60 are disposed on the side of the scintillator 53 that faces the X-ray radiation device 13 in the line sensor assembly 14, X-rays are directly incident on the elements 60, and X-rays of a predetermined energy band are detected by the elements 60. X-rays of an energy band higher than the predetermined energy band are also detected by the elements 60 because these X-rays are converted to visible light rays of a predetermined wavelength band by the scintillator 53. Therefore, the first through fourth detection units 41 to 44 are able to detect X-rays of a broad energy band.

### (5-2)

In the X-ray inspecting apparatus 10, a configuration is used in which the first through fourth detection units 41 to 44 are aligned in the line sensor assembly 14, but if a configuration were to be used in which all of the elements 60 were included on one unit, the unit would be larger and manufacturing costs would rise for reasons such as assembly being more difficult.

However, because the X-ray inspecting apparatus 10 employs a configuration in which the first through fourth detection units 41 to 44 are aligned in the forward-backward direction, the yield of each of the first through fourth detection units 41 to 44 is improved, the apparatus is easier to assemble, and manufacturing costs are reduced.

### (5-3)

In the X-ray inspecting apparatus 10, the first through fourth detection units 41 to 44, in which the plurality of elements 60 are disposed on the sides of the scintillators 53 that face the X-ray radiation device 13, are aligned in the forward-backward direction, which is the longitudinal direction of the detection units, but depending on the manner of alignment, there is a risk that the elements 60 and the scintillators 53 would not be continuous in the borders of adjacent units.

However, in the X-ray inspecting apparatus 10, the first through fourth detection units 41 to 44 are aligned in the forward-backward direction so that the detection main bodies 52 and the scintillators 53 of the first through fourth detection units 41 to 44 are aligned without gaps with the detection main bodies 52 and the scintillators 53 of the adjacent first through fourth detection units 41 to 44. Therefore, the continuity of the elements 60 and the scintillators 53 is ensured, and there is no problem of X-ray sensitivity being lowered in any section along the forward-backward direction.

### (5-4)

In the X-ray inspecting apparatus 10, the ceramic substrates 51, which have higher hardness than plastic substrates, are employed as the bases supporting the detection main bodies 52 and the scintillators 53 in the first through fourth detection units 41 to 44 of the line sensor assembly 14. Therefore, there are no situations in which the ceramic substrates 51 deform to compromise the continuity of the elements 60 and the scintillators 53 after the ceramic substrates 51 of adjacent first through fourth detection units 41 to 44 have been brought into contact and the relative positions thereof have been fixed.

### (5-5)

In the X-ray inspecting apparatus 10, the forward-backward directional length of the ceramic substrate 51, the forward-backward directional length of the detection main body 52, and the forward-backward directional length of the scintillator 53 are equal in each of the first through fourth detection units 41 to 44 of the line sensor assembly 14. The first through fourth detection units 41 to 44 are aligned sequentially so that the front and rear end faces of one ceramic substrate 51 is in contact with the front and rear end faces of the ceramic substrates 51 of adjacent first through fourth detection units 41 to 44, as shown in FIG. 9. The scintillators 53 of the first through fourth detection units 41 to 44 and the elements 60 of the detection main bodies 52 are thereby naturally aligned without gaps in the borders of the first through fourth detection units 41 to 44. Thus, the assembly steps are simplified, and manufacturing costs fall.

### (5-6)

In the X-ray inspecting apparatus 10, in all of the first through fourth detection units 41 to 44 of the line sensor assembly 14, the elements 60 are disposed on the overhanging parts 52b protruding leftward from the left-side end faces 51c of the ceramic substrates 51. Therefore, even in a line sensor assembly 14 in which the X-ray radiation device 13, the elements 60, and the scintillators 53 are aligned from the top downward, it is possible to achieve a state in which the ceramic substrates 51 are not located between the X-ray radiation device 13 and the elements 60 (see FIG. 6).

Specifically, if the elements 60 were to be included on the fixed parts 52a of the detection main bodies 52 fixed to the ceramic substrates 51, the ceramic substrates 51, the elements 60, and the scintillators 53 would be aligned from the top downward, and X-rays would first pass through the ceramic substrates 51 should X-rays be caused to be incident not from the scintillator 53-side but from the element 60-side. Ceramic substrates generally have higher X-ray absorptivity than plastic substrates, and the output of the X-ray radiation device 13 would need to be increased in order to maintain detection sensitivity.

In contrast, due to the elements 60 being disposed on and made to receive light on the overhanging parts 52b of the detection main bodies 52 in the X-ray inspecting apparatus 10, it is possible to yield a line sensor assembly 14 that can detect X-rays over a broad energy band with low output, in which X-rays are directly incident on the elements 60 from the X-ray radiation device 13 and X-rays that have passed through the elements 60 are incident on the scintillators 53.

### (5-7)

In the X-ray inspecting apparatus 10, because the elements 60 are disposed on the overhanging parts 52b of the detection main bodies 52 in the line sensor assembly 14, there is a risk that dust will collect on and adhere to the tops of the elements 60 if no countermeasures are taken. In view of this, in the X-ray inspecting apparatus 10, the elements 60 are covered from above by the cover panel 46, and loss of sensitivity of the elements 60 due to dust is suppressed. Because a carbon cover panel 46 is employed, which has a lower rate of X-ray absorption than the ceramic substrates 51, detection sensitivity can be maintained without increasing the output of the X-ray radiation device 13.

### (5-8)

In the X-ray inspecting apparatus 10, the mount 45 supporting the first through fourth detection units 41 to 44 and the cover panel 46 covering the plurality of elements 60 from above in the line sensor assembly 14 both have a contact face that comes into contact with the side faces of the ceramic substrates 51 of the first through fourth detection units 41 to 44. Specifically, the step side face 45b of the mount 45 comes into contact with the right-side end faces 51b of the ceramic substrates 51, and the right-side end face 46c of the main body part 46a of the cover panel 46 comes into contact with the left-side end faces 51c of the ceramic substrates 51. The ceramic substrates 51 of the first through fourth detection units 41 to 44 are thereby positioned with respect to the left-right direction (the X direction), whereby the scintillators 53 and the elements 60 of the detection main bodies 52 supported on the ceramic substrates 51 are also accurately positioned. Therefore, in the X-ray inspecting apparatus 10, the scintillators 53 and detection main bodies 52 of two adjacent detection units are aligned without gaps, and the continuity of the elements 60 and the scintillators 53 is ensured.

### (5-9)

In the line sensor assembly 14 of the X-ray inspecting apparatus 10, the state of X-ray detection stabilizes because X-rays that have passed through the slit 47a in the slitted panel 47 enter the elements 60 and the scintillators 53. The first through fourth detection units 41 to 44 are held by being vertically sandwiched between the slitted panel 47 and the mount 45. Therefore, with the scintillators 53 and the detection main bodies 52 aligned without gaps, the first through fourth detection units 41 to 44 can be maintained as being reliably supported on the mount 45.

### REFERENCE SIGNS LIST

- 10: X-ray inspecting apparatus
- 13: X-ray radiation device (X-ray source)
- 14: Line sensor assembly (detection part)
- 20: Control computer
- 21a: X-ray image production part (image production part)
- 21b: Foreign material presence/absence inspection part (inspection part)
- 41: First detection unit
- 42: Second detection unit
- 43: Third detection unit
- 44: Fourth detection unit
- 45: Mount (support member)
- 45b: Step side face (first side face contact part)
- 45c: Step side face
- 46: Cover panel (cover member)
- 46c: Right-side end face of cover panel (second side face contact part)
- 47: Slitted panel (slitted member)
- 47a: Slit
- 51: Ceramic substrate (base)
- 51b: Right-side end face of ceramic substrate (first side face of base)
- 51c: Left-side end face of ceramic substrate (second side face of base)
- 52: Detection main body
- 52a: Fixed part of detection main body
- 52b: Overhanging part of detection main body
- 53: Scintillator
- 60: Element

### CITATION LIST

### PATENT LITERATURE

<Patent Literature 1> Japanese Laid-open Patent Publication No. 2009-85627
<Patent Literature 2> Japanese Laid-open Patent Publication No. 2005-203708

## Claims

1. An X-ray inspecting apparatus (10) comprising;
an X-ray source (13) configured to radiate X-rays onto goods to be inspected;
a detection part (14) configured to detect X-rays of a predetermined energy band and visible light rays of a predetermined wavelength band and to generate a signal;
an image production part (21a) configured to produce an image on the basis of the signal generated by the detection part; and
an inspection part (21b) configured to inspect the goods on the basis of the image produced by the image production part,
**characterized in that**
the detection part has a plurality of detection units (41, 42, 43, 44) each of which individually has:
a scintillator (53) which extends in a predetermined direction and which emits visible light rays of the predetermined wavelength band by absorbing X-rays of an energy band higher than the predetermined energy band;
a detection main body (52) which is disposed on the side of the scintillator that faces the X-ray source and which includes a plurality of elements (60) aligned in the predetermined direction, the plurality of elements being sensitive to X-rays of the predetermined energy band and visible light rays of the predetermined wavelength band and generating the signal; and
a base (51) configured to support the scintillator and the detection main body; and
the plurality of detection units are aligned along the predetermined direction within the detection part so that the scintillator and the detection main body of any of the detection units are aligned without gaps with the scintillator and the detection main body of the adjacent detection unit.

2. The X-ray inspecting apparatus (10) according to claim 1, wherein
the bases (51) are made of ceramic material.

3. The X-ray inspecting apparatus (10) according to claim 1 or 2, wherein
the scintillator (53), the detection main body (52), and the base (51) are of equal length in the predetermined direction in each of the plurality of detection units (41, 42, 43, 44).

4. The X-ray inspecting apparatus (10) according to any of claims 1 to 3, wherein each
of the detection main bodies (52) has
a fixed part (52a) fixed to the base (51), and
an overhanging part (52b) protruding from an end of the base; and
the plurality of elements (60) are included on the overhanging part.

5. The X-ray inspecting apparatus (10) according to claim 4, wherein
the X-ray source (13) is positioned above the plurality of elements (60); and
the detection part (14) further has
a cover member (46) which covers the plurality of elements from above and has a lower rate of absorption of the X-rays than the bases (51).

6. The X-ray inspecting apparatus (10) according to claim 5, wherein
the detection part (14) further has
a support member (45) configured to support the plurality of detection units (41, 42, 43, 44);
the support member has
a first side face contact part (45b) which comes into contact with first side faces (51b) of the bases (51) of the plurality of detection units;
the cover member (46) has
a second side face contact part (46c) which comes into contact with second side faces (51c) that oppose the first side faces of the bases of the plurality of detection units; and
the bases of the plurality of detection units are positioned by the first side face contact part of the support member and by the second side face contact part of the cover member.

7. The X-ray inspecting apparatus (10) according to any of claims 1 to 3, wherein
the detection part (14) further has:
a support member (45) configured to support the plurality of detection units (41, 42, 43, 44); and
a slitted member (47) disposed between the X-ray source (13) and the plurality of detection units, and having a slit (47a) formed therein through which the X-rays pass; and
the plurality of detection units are sandwiched between the support member and the slitted member.

## Patentansprüche

1. Röntgenprüfvorrichtung (10) mit;
einer Röntgenquelle (13), die konfiguriert ist, Röntgenstrahlen auf zu prüfende Waren einzustrahlen;
einem Detektionsteil (14), der konfiguriert ist, Röntgenstrahlen eines vorgegebenen Energiebands und sichtbare Lichtstrahlen eines vorgegebenen Wellenlängenbands zu detektieren und ein Signal zu erzeugen;
einem Bilderzeugungsteil (21a), der konfiguriert ist, ein Bild auf der Grundlage des durch den Detektionsteil erzeugten Signals zu erzeugen; und
einem Prüfteil (21b), der konfiguriert ist, die Waren auf der Grundlage des durch den Bilderzeugungsteil erzeugten Bilds zu prüfen,
**dadurch gekennzeichnet, dass**
der Detektionsteil mehrere Detektionseinheiten (41, 42, 43, 44) aufweist, von denen jede einzelne aufweist:
einen Szintillator (53), der sich in eine vorgegebene Richtung erstreckt und der sichtbare Lichtstrahlen des vorgegebenen Wellenlängenbands durch Absorbieren von Röntgenstrahlen eines Energiebands emittiert, das höher als das vorgegebene Energieband ist;
einen Detektionshauptkörper (52), der auf der Seite des Szintillators angeordnet ist, die zur Röntgenquelle weist, und der mehrere Elemente (60) aufweist, die in die vorgegebene Richtung ausgerichtet sind, wobei die mehreren Elemente gegenüber Röntgenstrahlen des vorgegebenen Energiebands und sichtbaren Lichtstrahlen des vorgegebenen Wellenlängenbands empfindlich sind und das Signal erzeugen;
und
eine Basis (51), die konfiguriert ist, den Szintillator und den Detektionshauptkörper zu halten; und
die mehreren Detektionseinheiten längs der vorgegebenen Richtung innerhalb des Detektionsteils so ausgerichtet sind, dass der Szintillator und der Detektionshauptkörper von irgendeiner der Detektionseinheiten ohne Lücken mit dem Szintillator und dem Detektionshauptkörper der angrenzenden Detektionseinheit ausgerichtet sind.

2. Röntgenprüfvorrichtung (10) nach Anspruch 1, wobei
die Basen (51) aus einem Keramikmaterial bestehen.

3. Röntgenprüfvorrichtung (10) nach Anspruch 1 oder 2, wobei der Szintillator (53), der Detektionshauptkörper (52) und die Basis (51) in die vorgegebene Richtung in jeder der mehreren Detektionseinheiten (41, 42, 43, 44) eine gleiche Länge aufweisen.

4. Röntgenprüfvorrichtung (10) nach einem der Ansprüche 1 bis 3, wobei
jeder der Detektionshauptkörper (52) aufweist:
einen festen Teil (52a), der an der Basis (51) befestigt ist, und
einen überhängenden Teil (52b), der von einem Ende der Basis vorsteht; und die mehreren Elemente (60) im überhängenden Teil enthalten sind.

5. Röntgenprüfvorrichtung (10) nach Anspruch 4, wobei
die Röntgenquelle (13) über den mehreren Elementen (60) angeordnet ist; und
der Detektionsteil (14) ferner aufweist:
ein Abdeckelement (46), das die mehreren Elemente von oben abdeckt und eine niedrigere Absorptionsrate der Röntgenstrahlen als die Basen (51) aufweist.

6. Röntgenprüfvorrichtung (10) nach Anspruch 5, wobei der Detektionsteil (14) ferner aufweist:
eine Halteelement (45), das konfiguriert ist, die mehreren Detektionseinheiten (41, 42, 43, 44) zu halten;
das Halteelement weist auf:
einen ersten Seitenflächenkontaktteil (45b), der mit den ersten Seitenflächen (51b) der Basen (51) der mehreren Detektionseinheiten in Kontakt kommt;
das Abdeckelement (46) weist auf:
einen zweiten Seitenflächenkontaktteil (46c), der mit zweiten Seitenflächen (51c) in Kontakt kommt, die den ersten Seitenflächen der Basen der mehreren Detektionseinheiten gegenüberliegen; und
die Basen der mehreren Detektionseinheiten sind am ersten Seitenflächenkontaktteil des Halteelements und am zweiten Seitenflächenkontaktteil des Abdeckelements positioniert.

7. Röntgenprüfvorrichtung (10) nach einem der Ansprüche 1 bis 3, wobei
der Detektionsteil (14) ferner aufweist:
ein Halteelement (45), das konfiguriert ist, die mehreren Detektionseinheiten (41, 42, 43, 44) zu halten; und
ein Schlitzelement (47), das zwischen der Röntgenquelle (13) und den mehreren Detektionseinheiten angeordnet ist und eine darin ausgebildeten Schlitz (47a) aufweist, durch den die Röntgenstrahlen gehen; und
die mehreren Detektionseinheiten zwischen dem Halteelement und dem Schlitzelement angeordnet sind.

## Revendications

1. Dispositif d'inspection à rayons X (10), comprenant :
une source de rayons X (13) prévue pour irradier des articles à inspecter avec des rayons X ;
une section de détection (14) prévue pour détecter des rayons X d'une bande d'énergie définie et des rayons de lumière visible d'une bande de longueur d'onde définie, et pour générer un signal ;
une section de production d'image (21a) prévue pour produire une image sur la base du signal généré par la section de détection ; et
une section d'inspection (21b) prévue pour inspecter les articles sur la base de l'image produite par la section de production d'image,
**caractérisé en ce que**
la section de détection comprend une pluralité d'unités de détection (41, 42, 43, 44), chacune d'entre elle comportant :
un scintillateur (53) s'étendant dans une direction définie et émettant des rayons de lumière visible de la bande de longueur d'onde définie par absorption de rayons X d'une bande d'énergie supérieure à la bande d'énergie définie ;
un corps principal de détection (52) disposé sur le côté du scintillateur faisant face à la source de rayons X et comprenant une pluralité d'éléments (60) alignés dans la direction définie, ladite pluralité d'éléments étant sensible aux rayons X de la bande d'énergie définie et aux rayons de lumière visible de la bande de longueur d'onde définie et générant le signal ; et
une base (51) prévue pour supporter le scintillateur et le corps principal de détection ; et **en ce que**
la pluralité d'unités de détection sont alignées dans la direction définie à l'intérieur de la section de détection, de telle manière que le scintillateur et le corps principal de détection de l'une quelconque des unités de détection sont alignés sans espacements avec le scintillateur et le corps principal de détection de l'unité de détection adjacente.

2. Dispositif d'inspection à rayons X (10) selon la revendication 1, où
les bases (51) sont en matériau céramique.

3. Dispositif d'inspection à rayons X (10) selon la revendication 1 ou la revendication 2, où
le scintillateur (53), le corps principal de détection (52), et la base (51) ont une longueur égale dans la direction définie pour chaque unité de la pluralité d'unités de détection (41, 42, 43, 44).

4. Dispositif d'inspection à rayons X (10) selon l'une des revendications 1 à 3, où
chacun des corps principaux de détection (52) comporte une partie fixe (52a) fixée à la base (51), et
une partie en porte-à-faux (52b) faisant saillie d'une extrémité de la base ; et où la pluralité d'éléments (60) sont inclus sur la partie en porte-à-faux.

5. Dispositif d'inspection à rayons X (10) selon la revendication 4, où
la source de rayons X (13) est disposée au-dessus de la pluralité d'éléments (60) ; et la section de détection (14) comporte en outre
un élément de couverture (46) recouvrant la pluralité d'éléments sur le dessus et ayant un taux d'absorption des rayons X inférieur à celui des bases (51).

6. Dispositif d'inspection à rayons X (10) selon la revendication 5, où
la section de détection (14) comprend en outre un élément de support (45) prévu pour supporter la pluralité d'unités de détection (41, 42, 43, 44) ; l'élément de support comporte
une partie de contact de premières surfaces latérales (45b) venant en contact avec des premières surfaces latérales (51b) des bases (51) de la pluralité d'unités de détection ;
l'élément de couverture (46) comporte
une partie de contact de deuxièmes surfaces latérales (46c) venant en contact avec des deuxièmes surfaces latérales (51c) opposées aux premières surfaces latérales des bases de la pluralité d'unités de détection ; et où les bases de la pluralité d'unités de détection sont positionnées par la partie de contact de premières surfaces latérales de l'élément de support et par la partie de contact de deuxièmes surfaces latérales de l'élément de couverture.

7. Dispositif d'inspection à rayons X (10) selon l'une des revendications 1 à 3, où
la section de détection (14) comprend en outre :
un élément de support (45) prévu pour supporter la pluralité d'unités de détection (41, 42, 43, 44) ; et
un élément à fente (47) disposé entre la source de rayons X (13) et la pluralité d'unités de détection, et dans lequel est formée une fente (47a) par où passent les rayons X ; et où
la pluralité d'unités de détection est intercalée entre l'élément de support et l'élément à fente.
